# EUROPÄISCHE PATENTANMELDUNG

(11) **EP 1 507 073 A1**
(43) Veröffentlichungstag der Anmeldung: **16.02.2005**
(21) Anmeldenummer: 04006432.1
(22) Anmeldetag: 17.03.2004
(51) Int. Cl.: F01N 3/28, F02B 37/00

(54) **Abgasanlage für eine Brennkraftmaschine**

(30) Priorität: 12.08.2003 DE 10337336
(71) Anmelder: J. Eberspächer GmbH Co. KG, 73730 Esslingen (DE)
(72) Erfinder: Gaiser, Gerd, Dr., 72768 Reutlingen (DE); Oesterle, Jörg, 89150 Laichingen (DE); Zacke, Peter, Dr., 73095 Albershausen (DE)
(74) Vertreter: Patentanwalts-Partnerschaft, Rotermund + Pfusch + Bernhard

(57) **Zusammenfassung**

Die vorliegende Erfindung betrifft eine Abgasanlage (1) für eine Brennkraftmaschine, insbesondere in einem Kraftfahrzeug, umfassend eine Strömungmaschine (2), die bei ihrer Durchströmung eine Abgasströmung mit einem Drall beaufschlagt, eine Drallausrichteinrichtung (3), die unmittelbar stromab der Strömungsmaschine (2) angeordnet ist und bei ihrer Durchströmung mittels Strömungsleitelementen (15) den Drall der Abgasströmung auf einen vorbestimmten Zieldrallwinkel (16) ausrichtet, und eine Abgasbehandlungseinrichtung (4), die unmittelbar stromab der Drallausrichteinrichtung (3) angeordnet ist und einen durchströmbaren Körper (10) enthält, der im Betrieb der Brennkraftmaschine anströmseitig mit der ausgerichteten Abgasdrallströmung (17) beaufschlagt ist.

## Beschreibung

Die vorliegende Erfindung betrifft eine Abgasanlage für eine Brennkraftmaschine, insbesondere in einem Kraftfahrzeug.

Eine Abgasanlage enthält üblicherweise wenigstens eine Abgasbehandlungseinrichtung, wie z.B. ein Katalysator oder ein Partikelfilter. Eine derartige Abgasbehandlungseinrichtung arbeitet mit einem vom Abgas durchströmbaren Körper, in dem die eigentliche Abgasbehandlung stattfindet. Üblicherweise handelt es sich hierbei um einen keramischen Monolithen. Der Körper ist dabei in einem Gehäuse angeordnet und besitzt in der Regel einen anströmseitigen Stirnquerschnitt, der deutlich größer ist als der gasführende Querschnitt innerhalb einer Zuführungsleitung der Abgasanlage, die das Abgas der Abgasbehandlungseinrichtung zuführt. Dementsprechend ist das Gehäuse der Abgasbehandlungseinrichtung regelmäßig mit einem Einlauftrichter versehen, der den kleineren Querschnitt der Zuführungsleitung auf den größeren Querschnitt des Körpers der Abgasbehandlungseinrichtung aufweitet. Durch diese Querschnittserweiterung kommt es im Betrieb der Brennkraftmaschine regelmäßig dazu, dass im wesentlichen nur ein zentraler Kernbereich des Körpers durchströmt wird, während ein radial außenliegender, ringförmiger Randbereich nicht oder deutlich weniger durchströmt wird. Die Leistungsfähigkeit der Abgasbehandlungseinrichtung wird dadurch nicht vollständig ausgenutzt.

Aus der DE 198 39 754 A1 und der WO 00/12879 ist es bekannt, unmittelbar stromauf eine Abgasbehandlungseinrichtung eine Drallerzeugereinrichtung anzuordnen, die bei ihrer Durchströmung mittels Strömungsleitelementen die Abgasströmung mit einem Drall beaufschlagt. Die. so erzeugte Abgasdrallströmung besitzt aufgrund der Zentrifugalkräfte auch eine radiale Komponente und kann bei der Durchströmung des Einlauftrichters der Querschnittserweiterung ohne weiteres folgen. Bei einer entsprechenden Dimensionierung des Dralls kann somit eine relativ gleichmäßige Anströmung der Stirnquerschnittsfläche des Körpers in der Abgasbehandlungseinrichtung erreicht werden. Die Leistungsfähigkeit der Abgasbehandlungseinrichtung wird dadurch besser ausgenutzt.

Bei der Durchströmung der Drallerzeugereinrichtung kommt es aufgrund der Umlenkung der Abgasströmung zu einem Druckverlust. Dieser Druckverlust'erhöht den Strömungswiderstand der Abgasanlage und reduziert dadurch die Leistungsfähigkeit der Brennkraftmaschine.

Hier will die Erfindung Abhilfe schaffen. Die vorliegende Erfindung beschäftigt sich mit dem Problem, für eine Abgasanlage der eingangs genannten Art eine verbesserte Ausführungsform anzugeben, bei der insbesondere ein Druckverlust bei der Erzeugung einer Drallströmung reduziert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, in einem Abgasstrang, der eine Strömungsmaschine enthält, die bei ihrer Durchströmung ohnehin einen mehr oder weniger starken Drall erzeugt, eine Drallausrichteinrichtung unmittelbar stromab der Strömungsmaschine und unmittelbar stromauf der Abgasbehandlungseinrichtung anzuordnen. Die Drallausrichteinrichtung enthält Strömungsleitelemente, welche die von der Strömungsmaschine kommende Drallströmung im Hinblick auf einen vorbestimmten Zieldrallwinkel ausrichten. Durch diese Maßnahme kann ein stromab der Strömungsmaschine ohnehin vorhandener Drall genutzt werden, um die gewünschte Drallströmung für die optimale Durchströmung der Abgasbehandlungseinrichtung zu erzeugen. Die hierzu erforderliche Umlenkung innerhalb der Drallausrichteinrichtung ist dabei erheblich kleiner als in einer Drallerzeugereinrichtung, die eine reine Axialströmung mit einem Drall beauftschlagt. Da die Strömungsleitelemente der erfindungsgemäß vorgeschlagenen Drallausrichteinrichtung somit weniger Umlenkarbeit verrichten müssen, entsteht bei der Durchströmung der Drallausrichteinrichtung auch nur ein reduzierter Druckabfall. Durch die Ausnutzung eines innerhalb der Abgasanlage ohnehin auftretenden, an sich unerwünschten Dralls kann ein zusätzlicher Druckverlust bei der Durchströmung der Drallausrichteinrichtung zur Erzeugung des für die Abgasbehandlungseinrichtung gewünschten Dralls reduziert werden, wodurch insgesamt der Durchströmungswiderstand der Abgasanlage reduziert und die Leistungsfähigkeit der Brennkraftmaschine erhöht wird.

Entsprechend einer vorteilhaften Ausführungsform können die Strömungsleitelemente der Drallausrichteinrichtung anströmseitig gegenüber einer Hauptströmungsrichtung der Abgase gleichsinnig orientiert sein wie die aus der Strömungsmaschine austretende Abgasdrallströmung. Bei dieser Ausführungsform muss die von der Strömungsmaschine kommende Abgasdrallströmung am Eintritt der Drallausrichteinrichtung bzw. am anströmseitigen Ende der Strömungsleitelemente nur relativ geringförmig umgelenkt werden, so dass hier wenig Druckverlust entsteht.

Bei einer vorteilhaften Weiterbildung kann eine Neigung der Strömungsleitelemente gegenüber einer Hauptströmungsrichtung der Abgase in dieser Hauptströmungsrichtung von einem anströmseitigen Anstellwinkel zu einem abströmseitigen Abströmwinkel zunehmen. Auf diese Weise wird innerhalb der Strömungsleitelemente eine stetige Umlenkung der Abgasströmung erreicht, was mit einem vergleichsweise geringen Druckverlust einhergeht.

Desweiteren ist von besonderem Vorteil, den Zieldrallwinkel so zu wählen, dass er bei kleiner Drehzahl und/oder Last der Brennkraftmaschine größer und bei großer Drehzahl und/oder Last der Brennkraftmaschine kleiner ist als ein Drallwinkel der aus der Strömungsmaschine austretenden Abgasdrallströmung. Durch diese Maßnahme werden die unterschiedlichen Betriebszustände der Strömungsmaschine bzw. der Brennkraftmaschine berücksichtigt. Bei niedriger Drehzahl und/oder Last der Brennkraftmaschine kann die Strömungsmaschine der Abgasströmung nur einen vergleichsweise kleinen Drall aufprägen, so dass die Abgasdrallströmung am Austritt der Strömungsmaschine nur einen vergleichsweise kleinen Drallwinkel besitzt. In der Drallausrichteinrichtung wird dieser Istdrallwinkel in den Zieldrallwinkel überführt. Diese Drallwinkelvergrößerung geht mit einem Druckverlust einher, der jedoch kleiner ausfällt als bei einer herkömmlichen Drallerzeugereinrichtung, die mit einer Axialströmung beaufschlagt wird, also mit einem Drallwinkel mit dem Wert Null. Bei großer Drehzahl und/oder Last der Brennkraftmaschine kann die Strömungsmaschine jedoch einen starken Drall in der Abgasströmung erzeugen, so dass der Drallwinkel der Abgasdrallströmung größer ist als der erwünschte Zieldrallwinkel. In diesem Fall erfolgt innerhalb der Drallausrichteinrichtung wieder eine Überführung des Istdrallwinkels in den Zieldrallwinkel, wobei jetzt der Drallwinkel reduziert wird. Auch dies erfolgt bei einem relativ kleinen oder vernachlässigbaren Druckverlust. Bei einer entsprechenden Geometrie der Strömungsleitelemente kann in diesem Fall sogar ein Druckrückgewinn erreicht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,

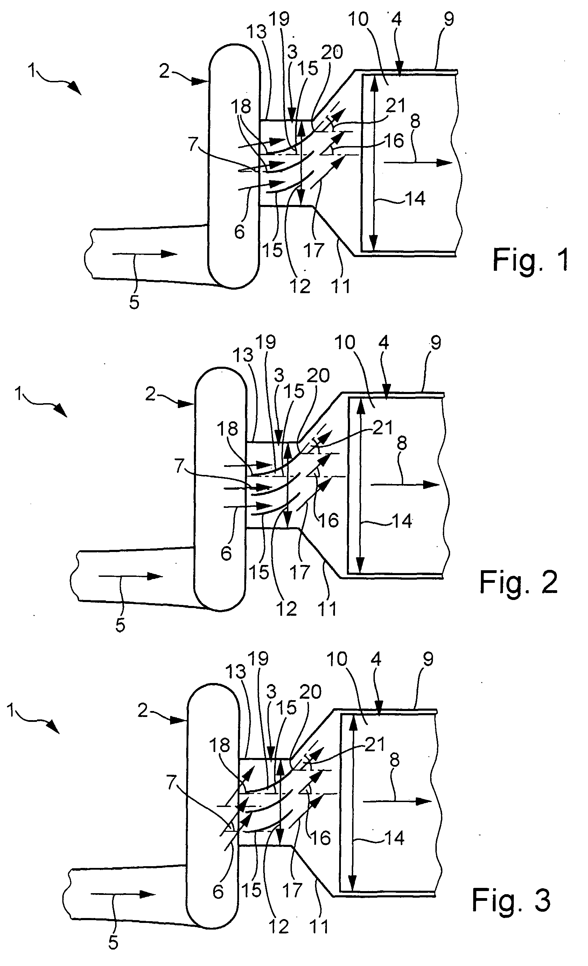

- Fig. 1 bis 3: stark vereinfachte Prinzipdarstellungen einer erfindungsgemäßen Abgasanlage, jedoch bei unterschiedlichen Betriebszustände einer damit - ausgestatteten Brennkraftmaschine.

Entsprechend den Fig. 1 bis 3 umfasst eine erfindungsgemäße Abgasanlage 1 zumindest eine Strömungsmaschine 2, eine Drallausrichteinrichtung 3 sowie eine Abgasbehandlungseinrichtung 4. Die Abgasanlage 1 ist an eine hier nicht dargestellte Brennkraftmaschine angeschlossen und dient zur Abführung und Nachbehandlung der im Betrieb der Brennkraftmaschine entstehende Abgase. Dabei können die Brennkraftmaschine und somit auch ihre Abgasanlage 1 in einem Kraftfahrzeug angeordnet sein.

Die Strömungsmaschine 2 kann beispielsweise als Turbine, in der Regel als Turbine eines Abgasturboladers ausgebildet sein. Die Strömungsmaschine 2 besitzt einen Aufbau, der einer der Strömungsmaschine 2 zugeführten, durch einen Pfeil symbolisierten Abgasströmung 5 einen Drall aufprägt. Dementsprechend tritt aus der Strömungsmaschine 2 eine mit einem Drall beaufschlagte Abgasdrallströmung 6 aus, die durch drei Pfeile symbolisiert ist. Die Abgasdrallströmung 6 besitzt einen Drallwinkel 7. Unter einem "Drallwinkel" wird im vorliegenden Fall derjenige Winkel verstanden, den die Drallströmung außerhalb ihres Drehzentrums bezüglich einer Geraden, die parallel zur Drehachse der Drallströmung bzw. parallel zu einer durch einen Pfeil symbolisierten Hauptströmungsrichtung 8 einnimmt.

Dabei ist von Bedeutung, dass der bei der Durchströmung der Strömungsmaschine 2 entstehende Drall für die Funktion der Strömungsmaschine 2 ein nicht erforderlicher und an sich aufgrund des damit einhergehenden Druckverlusts ein nicht erwünschter Nebeneffekt ist.

Bei der Abgasbehandlungseinrichtung 4 handelt es sich zweckmäßig um einen Katalysator oder um ein Partikelfilter, insbesondere Rußfilter. Die Abgasbehandlungseinrichtung 4 besitzt ein Gehäuse 9, in dem ein vom Abgas durchströmbarer Körper 10 angeordnet ist. Bei diesem Körper 10 handelt es sich vorzugsweise um einen Monolithen, der zweckmäßig aus einer Keramik hergestellt ist. Grundsätzlich kann der Körper 10 auch aus einem beliebigen anderen geeigneten Katalysator-Trägermaterial oder Filtermaterial bestehen. Die Abgasbehandlungseinrichtung 4 ist an ihrer Eintrittsseite mit einem Einlauftrichter 11 ausgestattet, dessen Öffnungsquerschnitt in der Hauptströmungsrichtung 8 zunimmt. Der Einlauftrichter 11 bildet somit einen Übergang zwischen einem Zuführquerschnitt 12 in einer Zuführungsleitung 13 und einem axialen Stirnquerschnitt 14 des Körpers 10. Die Zuführungsleitung 13 führt die Abgase zum Einlauftrichter 11.

In dieser Zuführungsleitung 13 ist die Drallausrichteinrichtung 3 ausgebildet bzw. bildet die Zuführungsleitung 13 einen Bestandteil der Drallausrichteinrichtung 3, insbesondere deren Gehäuse. Die Drallausrichteinrichtung 3 enthält mehrere Strömungsleitelemente 15, die so ausgestaltet sind, dass sie die ankommende Strömung mit einem Drall beaufschlagen, der am Austritt der Drallausrichteinrichtung 3 einen vorbestimmten Zieldrallwinkel 16 besitzt. Die so gebildete Zieldrallströmung 17 ist wieder durch drei Pfeile symbolisiert.

Der Zieldrallwinkel 16 ist so bemessen, dass sich bei der Durchströmung des Einlasstrichters 11 eine Aufweitung der Abgasströmung ergibt, die dazu führt, dass der Körper 10 anströmseitig über seinen gesamten Stirnquerschnitt 14 möglichst gleichmäßig angeströmt wird. Durch die Strömungsaufweitung im Einlauftrichter 11 kann somit eine gleichmäßige Verteilung der Abgasströmung auf den gesamten durchströmbaren Querschnitt des Körpers 10 erreicht werden. Hierdurch wird die Effektivität der Abgasbehandlungseinrichtung 4 entsprechend gesteigert.

Von besonderer Bedeutung ist bei der erfindungsgemäßen Abgasanlage 1 die gewählte Anordnung, wonach die Drallausrichteinrichtung 3 unmittelbar stromab der Strömungsmaschine 2 und unmittelbar stromauf der Abgasbehandlungseinrichtung 4 angeordnet ist. Durch diese erfindungsgemäße Anordnung kann die Drallausrichteinrichtung 3 den von der Strömungsmaschine 2.ohnehin erzeugten, parasitären Drall ausnutzen und dadurch die Energie zur Erzeugung des gewünschten Zieldralls reduzieren. Hierdurch ergibt sich bei der Durchströmung der Drallausrichteinrichtung 3 nur ein vergleichsweise niedriger Druckverlust, was den Gesamtströmungswiderstand der Abgasanlage 1 vergleichsweise niedrig hält.

Insbesondere ist bei der erfindungsgemäßen Abgasanlage 1 der bei der Drallerzeugung entstehende Druckverlust niedriger als bei einer herkömmlichen Anlage, bei welcher eine (reine) Axialströmung mit dem gewünschten Zieldrall beaufschlagt werden soll. Dies ist beispielsweise dann der Fall, wenn die Abgasanlage 1 keine drallerzeugende Strömungsmaschine 2 enthält oder wenn die Drallausrichteinrichtung 3 nicht unmittelbar stromab der Strömungsmaschine, sondern dazu beabstandet in der Abgasanlage 1 angeordnet ist.

Die von der Strömungsmaschine 2 erzeugte Abgasdrallströmung 6 besitzt einen bestimmten Drehsinn. Im dargestellten Beispiel rotiert die Abgasdrallströmung 6 bezüglich der Hauptströmungsrichtung 8 im Gegenuhrzeigersinn, also linksdrehend. Dementsprechend ist die durch die Pfeile 6 charakterisierte Strömungsrichtung an der dem Betrachter zugewandten Seite um den Drallwinkel 7 gegenüber der Hauptströmungsrichtung 8 nach oben geneigt. Entsprechend der hier gezeigten, besonders vorteilhaften Ausführungsform sind die Strömungsleitelemente 15 gleichsinnig zur Abgasdrallströmung 6 orientiert, d.h. die Strömungsleitelemente 15 sind in der Hauptströmungsrichtung 8 nach links drehend, also im Gegenuhrzeigersinn geneigt. Die in den Fig. 1 bis 3 gezeigten Strömungsleitelemlente 15 sind somit an der dem Betrachter zugewandten Seite von der Hauptströmungsrichtung 8 nach oben geneigt.

Die Strömungsleitelemente 15 besitzen dabei gegenüber der Hauptströmungsrichtung 8 an einer Anströmkante 18 einen Anström- oder Anstellwinkel 19 und an einer Abströmkante 20 einen Abströmwinkel 21. Dieser Abströmwinkel 21 definiert dabei den mit Hilfe der Drallausrichteinrichtung 3 erzielbaren Drallwinkel, so dass der Abströmwinkel 21 im wesentlichen mit dem Zieldrallwinkel 16 identisch ist.

Bei der hier gezeigten Ausführungsform sind die Strömungsleitelemente 15 so geformt, dass ihre Neigung in Richtung der Hauptströmungsrichtung 8 vom Anstellwinkel 19 an der Anströmkante 18 bis zum Abströmwinkel 21 bzw. bis zum Zieldrallwinkel 16 an der Abströmkante 20 zunimmt. Hierdurch wird eine vergleichsweise sanfte Umlenkung der ankommenden Abgasdrallströmung 6 erreicht, so dass die Drallausrichteinrichtung 3 nur einen vergleichsweise kleinen Druckverlust erzeugt.

In den Fig. 1 bis 3 gezeigten Darstellungen unterscheiden sich lediglich durch den Drallwinkel 7 der die Strömungsmaschine 2 verlassenden Drallströmung 6. Dieser Drallwinkel 7 ist dabei ein Maß für die Drallstärke der jeweiligen Abgasströmung. Je stärker der jeweilige Drall, desto größer ist der zugehörige Drallwinkel. Die Drallintensität der aus der Strömungsmaschine 2 austretenden Abgasdrallströmung hängt vom Betriebszustand der Strömungsmaschine und somit vom Betriebszustand der damit ausgestatteten Brennkraftmaschine ab. Bei größeren Drehzahlen und/oder größeren Lasten erzeugt die Brennkraftmaschine einen größeren Abgasvolumenstrom, der bei der Durchströmung der Strömungsmaschine 2 zu einer größeren Drallintensität und somit zu einem größeren Drallwinkel 7 führt. Entsprechendes gilt umgekehrt für kleinere Drehzahlen und/oder kleinere Lasten der Brennkraftmaschine, die zu kleineren Drallintensitäten und somit zu kleineren Drallwinkeln 7 führen.

Fig. 1 zeigt eine Situation, die bei mittleren Drehzahlen und/oder mittleren Lasten entsteht und somit bei der Brennkraftmaschine am häufigsten auftritt. Die Drallausrichteinrichtung 3 ist auf diesen Zustand abgestimmt, in dem der Anstellwinkel 19 etwa so groß wie derjenige Drallwinkel 7 gewählt ist, der bei mittleren Lasten und/oder Drehzahlen der Brennkraftmaschine am häufigsten in der die Strömungsmaschine 2 verlassenden Abgasdrallströmung auftritt. Bei derartigen Betriebszuständen kommt es somit am Einlass der Drallausrichteinrichtung 3 zu keiner Strömunsumlenkung. Erst bei der Durchströmung der Drallausrichteinrichtung 3 wird der Drallwinkel 7 der Abgasströmung auf den Zieldrallwinkel 16 vergrößert. Der hierbei entstehenden Druckverlust ist vergleichsweise gering.

Fig. 2 zeigt einen Zustand, der sich bei kleinen Drehzahlen und/oder kleinen Lasten der Brennkraftmaschine einstellen kann. Dementsprechend besitzt die aus der Strömungsmaschine 2 austretende Abgasdrallströmung 6 einen vergleichsweise kleinen Drallwinkel 7. Bei dieser Ausführungsform kommt es bereits beim Einströmen der Abgasdrallströmung in die Drallausrichteinrichtung 3 zu einer geringfügigen Umlenkung, die jedoch aufgrund des bereits vorhandenen Dralls nur einen relativ kleinen Druckverlust mit sich bringt. Nach der Durchströmung der Drallausrichteinrichtung 3 besitzt die Abgasströmung auch in diesem Fall mehr oder weniger den erwünschten Zieldrallwinkel 16.

Im Unterschied dazu zeigt Fig. 3 einen Zustand, der sich dann einstellen kann, wenn die Brennkraftmaschine bei größere Last und/oder bei größeren Drehzahlen betrieben wird. Folglich hat die Abgasdrallströmung 6, welche die Strömungsmaschine 2 verlässt, einen vergleichsweise intensiven Drall, also einen relativ großen Drallwinkel 7. Bei dieser Ausgangslage kommt es bei der Durchströmung der Drallausrichteinrichtung 3 zu einer Reduzierung des Dralls in der Abgasdrallströmung, wobei auch hier die Abgasströmung beim Austritt aus der Drallausrichteinrichtung 3 im wesentlichen wieder den gewünschten Zieldrallwinkel 16 aufweist. Bei einer geeigneten Auslegung, insbesondere Formgebung, der Strömungsleitelemente 15 ist es grundsätzlich auch möglich, diese Drallreduzierung mit einem Druckrückgewinn zu verbinden, was sich besonders vorteilhaft für den Gesamtdruckverlust der Abgasanlage 1 auswirkt.

Die Auslegung des Zieldrallwinkels 16 ist zunächst im Hinblick auf die gewünschte Strömungsverteilung entlang der axialen Stirnseite des Körpers 10 abgestimmt. Zweckmäßig sind der Zieldrallwinkel 16 und somit der Abströmwinkel 21 sowie insbesondere der Anstellwinkel 19 so gewählt, dass der jeweilige Winkel 16, 21, 19 bei kleiner Drehzahl und/oder Last der Brennkraftmaschine größer ist als der Drallwinkel 7 der aus der Strömungsmaschine 2 austretenden Abgasdrallströmung 6 (vgl. Fig. 2). Bei großer Drehzahl und/oder Last der Brennkraftmaschine sind die genannten Winkel 16, 21, 19 hingegen kleiner als der Drallwinkel 7 der aus der Strömungsmaschine 2 austretenden Abgasdrallströmung 6 (vgl. Fig. 3). Die Strömungsleitelemente 15 können grundsätzliche einen beliebigen Aufbau besitzen. Beispielsweise handelt es sich bei den Strömungsleitelementen 15 um Leitschaufeln, die sich bezüglich einer Längsmittelachse der Drallausrichteinrichtung 3 radial erstrecken. Desweiteren sind auch Ausführungsformen möglich, bei denen die Strömungsleitelemente 15 sich nicht über den gesamten Querschnitt der Drallausrichteinrichtung 3 erstrecken, sondern nur in einem radial außenliegenden Ringbereich. Bei einer derartigen Ausführungsform bleibt eine zentrale Abgasströmung im wesentlichen unbeeinflusst, so dass diese einen zentralen Ausschnitt der axialen Stirnseite des Körpers 10 beaufschlagt. Die Strömungsleitelemente 15 beeinflussen dann die Abgasströmung im radial außenliegenden Ringbereich und erzielen so die gewünschte gleichmäßige Verteilung der Abgasströmung auf den gesamten Eintrittsquerschnitt des Körpers 10. Im Hinblick auf die Gestaltungsmöglichkeiten für die Strömungsleitelemente 15 wird insbesondere auch auf die bereits eingangs genannten DE 198 39 754 A1 und WO 00/12879 verwiesen, deren Inhalt hiermit durch ausdrückliche Bezugnahmen zum Offenbarungsgehalt der vorliegenden Erfindung hinzugefügt wird.

## Patentansprüche

1. Abgasanlage für eine Brennkraftmaschine, insbesondere in einem Kraftfahrzeug,
- mit einer Strömungsmaschine (2), die bei ihrer Durchströmung eine Abgasströmung mit einem Drall beaufschlagt,
- mit einer Drallausrichteinrichtung (3), die unmittelbar stromab der Strömungsmaschine (2) angeordnet ist und bei ihrer Durchströmung mittels Strömungsleitelementen (15) den Drall der Abgasströmung auf einen vorbestimmten Zieldrallwinkel (16) ausrichtet,
- mit einer Abgasbehandlungseinrichtung (4), die unmittelbar stromab der Drallausrichteinrichtung (3) angeordnet ist und einen durchströmbaren Körper (10) enthält, der im Betrieb der Brennkraftmaschine anströmseitig mit der ausgerichteten Abgasdrallströmung (17) beaufschlagt ist.

2. Abgasanlage nach Anspruch 1,
**dadurch gekennzeichnet,**
**dass** die Strömungsleitelemente (15) anströmseitig gegenüber einer Hauptströmungsrichtung (8) der Abgase gleichsinnig orientiert sind wie die aus der Strömungsmaschine (2) austretende Abgasdrallströmung (6).

3. Abgasanlage nach Anspruch 1 oder 2,
**dadurch gekennzeichnet,**
**dass** eine Neigung der Strömungsleitelemente (15) gegenüber einer Hauptströmungsrichtung (8) der Abgase in der Hauptströmungsrichtung (8) von einem anströmseitigen Anstellwinkel (19) zu einem abströmseitigen Abströmwinkel (21) zunimmt.

4. Abgasanlage nach einem der Ansprüche 1 bis 3,
**dadurch gekennzeichnet,**
**dass** der Zieldrallwinkel (16) und/oder ein Abströmwinkel (21) der Strömungsleitelemente (15) und/oder ein Anstellwinkel (19) der Strömungsleitelemente (15) so gewählt ist/sind, dass er/sie bei kleiner Drehzahl und/oder Last der Brennkraftmaschine größer und bei großer Drehzahl und/oder Last der Brennkraftmaschine kleiner ist/sind als ein Drallwinkel (7) der aus der Strömungsmaschine (2) austretenden Abgasdrallströmung (6).

5. Abgasanlage nach einem der Ansprüche 1 bis 4,
**dadurch gekennzeichnet,**
**dass** die Strömungsmaschine (2) eine Turbine ist.

6. Abgasanlage nach einem der Ansprüche 1 bis 5,
**dadurch gekennzeichnet,**
**dass** die Strömungsmaschine (2) eine Turbine eines Abgasturboladers ist.

7. Abgasanlage nach einem der Ansprüche 1 bis 6,
**dadurch gekennzeichnet,**
**dass** die Abgasbehandlungseinrichtung (4) ein Katalysator oder Partikelfilter ist.

8. Abgasanlage nach einem Ansprüche 1 bis 7,
**dadurch gekennzeichnet,**
**dass** der durchströmbare Körper (10) der Abgasbehandlungseinrichtung (4) ein Monolith.

9. Abgasanlage nach einem der Ansprüche 1 bis 8,
**dadurch gekennzeichnet,**
**dass** die Strömungsleitelemente (15) nur einen radial außenliegenden Ringbereich der Abgasströmung beeinflussen.

10. Abgasanlage nach einem der Ansprüche 1 bis 9,
**dadurch gekennzeichnet,**
**dass** die Strömungsleitelemente (15) als Leitschaufeln ausgebildet sind, die sich bezüglich einer Längsmittelachse der Drallausrichteinrichtung (3) radial erstrecken.
